# EUROPEAN PATENT APPLICATION

(11) **EP 4 803 651 A1**
(43) Date of publication of application: **09.09.2026**
(21) Application number: 24885777.3
(22) Date of filing: 30.10.2024
(51) Int. Cl.: C23C 2/12, C22C 21/00, C22C 38/00, C22C 38/60, C21D 9/46, C23C 2/02, C23C 2/28

(54) **PLATED STEEL SHEET**

(30) Priority: 01.11.2023 JP 2023187789
(71) Applicant: Nippon Steel Corporation, Tokyo 100-8071 (JP)
(72) Inventor: MITSUNOBU, Takuya, Tokyo 100-8071 (JP); TAKEBAYASHI, Hiroshi, Tokyo 100-8071 (JP)
(74) Representative: Vossius & Partner Patentanwälte Rechtsanwälte mbB
(86) International application number: PCT/JP2024/038741
(87) International publication number: WO 2025/095010

(57) **Abstract**

Provided is a plated steel sheet comprising a base steel sheet and a plating layer formed on a surface of the base steel sheet, wherein the plating layer has a predetermined chemical composition, in a cross-section of the plating layer, an interfacial length L of the plating layer and the base steel sheet and a length L₀ of a surface of the base steel sheet satisfies (L-L₀ )/L₀ ×100≥3, and the plating layer comprises an Fe-Al phase and a thickness of the Fe-Al phase is 4 to 50 µm.

## Description

### FIELD

The present invention relates to a plated steel sheet.

### BACKGROUND

A Zn-based plated steel sheet is known to exhaust a sacrificial corrosion preventive action and to have excellent corrosion resistance. On the other hand, numerous plated steel sheets provided with plating layers containing other elements in place of Zn or in addition to the same have been proposed.

For example, PTL 1 describes an Al-based plated steel sheet comprised of an underlying steel sheet and, on at least one surface of that underlying steel sheet, a first alloy plating layer of a thickness of 3 to 30 µm having a chemical composition containing, by mass%, Fe: 40 to 70% and Mn: 0.3 to 10% and a balance of Al and unavoidable impurities, on the first alloy plating layer, a second alloy plating layer of a thickness of 0.10 to 10 µm having a chemical composition containing, by mass%, Fe: 5 to 50% and Mn: 5 to 40% and a balance of Al and unavoidable impurities, and, deposited on the surface of the second alloy plating layer, non-alloyed Al in an amount of deposition of 0 to 1000 mg/m² . Further, PTL 1 teaches that (i) by hot dip coating the underlying steel sheet with an Al-Mn alloy, the surface of the underlying steel sheet is formed with two Al-Fe-Mn alloy plating layers differing from each other in Mn content and (ii) by restricting the amount of deposition of non-alloyed Al deposited on the surfaces of the Al-Fe-Mn alloy plating layers to a range of 1000 mg/m² or less, it is possible to realize both post-painting corrosion resistance and resistance spot weldability in an environment simulating the corrosive environment of external panels of automobiles.

### [CITATION LIST]

### [PATENT LITERATURE]

[PTL 1] Japanese Unexamined Patent Publication No. 2020-122205

### SUMMARY

### [TECHNICAL PROBLEM]

In an Al-based plated steel sheet such as described in PTL 1, to secure post-painting corrosion resistance, in general alloying is required. However, an alloyed Al-based plating is relatively hard, and therefore the cold formability of the plated steel sheet sometimes falls.

Therefore, the present invention has as its object the provision of a plated steel sheet provided with an Al-containing plating layer which has improved post-painting corrosion resistance and cold formability.

### [SOLUTION TO PROBLEM]

The inventors engaged in studies to achieve the above object and as a result discovered that by suitably setting a chemical composition of the Al-containing plating layer and suitably controlling a thickness of an Fe-Al phase contained in the Al-containing plating layer and a form of the interface of the Al-containing plating layer and base steel sheet, it is possible to achieve an improved post-painting corrosion resistance and cold formability, and thereby completed the present invention.

The present invention able to achieve the above object is as follows:
(1) A plated steel sheet comprising a base steel sheet and a plating layer formed on a surface of the base steel sheet, wherein
   the plating layer has a chemical composition comprising, by mass%,
   Fe: 20.0 to 55.0%,
   Mg: 0 to 10.0%,
   Si: 0 to 10.0%, and
   Zn: 0 to 30.0%,
   further comprising at least one of
   Ni: 0 to 1.000%,
   Ca: 0 to 4.000%,
   Sb: 0 to 0.500%,
   Pb: 0 to 0.500%,
   Cu: 0 to 1.000%,
   Sn: 0 to 1.000%,
   Ti: 0 to 1.000%,
   Cr: 0 to 1.000%,
   Nb: 0 to 1.000%,
   Zr: 0 to 1.000%,
   Mn: 0 to 1.000%,
   Mo: 0 to 1.000%,
   Ag: 0 to 1.000%,
   Li: 0 to 1.000%,
   La: 0 to 0.500%,
   Ce: 0 to 0.500%,
   B: 0 to 0.500%,
   Y: 0 to 0.500%,
   Sr: 0 to 0.500%,
   In: 0 to 0.500%,
   Co: 0 to 0.500%,
   Bi: 0 to 0.500%,
   P: 0 to 0.500%,
   W: 0 to 0.500%, and
   V: 0 to 0.500% in a total of 5.000% or less, and
   a balance: 20.0% or more of Al and impurities,
   in a cross-section of the plating layer, an interfacial length L of the plating layer and the base steel sheet and a length L₀ of a surface of the base steel sheet satisfies (L-L₀ )/L₀ ×100≥3, and
   the plating layer comprises an Fe-Al phase and a thickness of the Fe-Al phase is 4 to 50 µm.
(2) The plated steel sheet according to the above (1), wherein (L-L₀ )/L₀ ×100≥5.
(3) The plated steel sheet according to the above (2), wherein (L-L₀ )/L₀ ×100≥7.
(4) The plated steel sheet according to any one of the above (1) to (3), wherein an Mg content in the plating layer is 0.2% or more.
(5) The plated steel sheet according to any one of the above (1) to (4), wherein the chemical composition comprises, by mass%,
   Mg: 0.3 to 10.0% and
   Si: 0 to 1.0%.
(6) The plated steel sheet according to any one of the above (1) to (5), wherein the thickness of the Fe-Al phase is 12 to 50 µm.
(7) The plated steel sheet according to any one of the above (1) to (6), wherein in the cross-section of the plating layer, projected lengths Ti of an Fe-Al-Si phase in the plating layer and a length L₀ of a surface of the base steel sheet satisfy ΣTᵢ /L₀ ×100≤20.
(8) The plated steel sheet according to the above (7), wherein ΣTᵢ /L₀ ×100≤1.
(9) The plated steel sheet according to any one of the above (1) to (8), wherein the chemical composition comprises, by mass%, Mg: 0.3 to 10.0%,
   the plating layer further comprises an Mg-containing phase, and
   in a cross-section of the plating layer, a surface coverage rate of the Mg-containing phase is 20 to 100%.
(10) The plated steel sheet according to the above (9), wherein the surface coverage rate of the Mg-containing phase is 60 to 100%.
(11) The plated steel sheet according to any one of the above (1) to (10), wherein an Mg content in the plating layer is 2.4% or less.
(12) The plated steel sheet according to any one of the above (1) to (11), wherein an Si content in the plating layer is 0.2% or more.
(13) The plated steel sheet according to any one of the above (1) to (12), wherein an area ratio of an MgZn₂ phase in the plating layer is less than 10%.

### [ADVANTAGEOUS EFFECTS OF INVENTION]

According to the present invention, it is possible to provide a plated steel sheet provided with an Al-containing plating layer which has improved post-painting corrosion resistance and cold formability.

### BRIEF DESCRIPTION OF DRAWINGS

FIG. 1 is a cross-sectional schematic view of a plated steel sheet according to an embodiment of the present invention and shows an interfacial length L of a plating layer and base steel sheet and a length L₀ of a surface of the base steel sheet.
FIG. 2 is a cross-sectional schematic view of a plated steel sheet according to a preferred embodiment of the present invention and shows projected lengths Tᵢ of an Fe-Al-Si phase and a length L₀ of a surface of the base steel sheet.
FIG. 3 is a cross-sectional schematic view of a plated steel sheet according to another preferred embodiment of the present invention and shows a surface coverage rate of an Mg-containing phase.

### DESCRIPTION OF EMBODIMENTS

### <Plated Steel Sheet>

The plated steel sheet according to an embodiment of the present invention comprises a base steel sheet and a plating layer formed on a surface of the base steel sheet, wherein
the plating layer has a chemical composition comprising, by mass%,
Fe: 20.0 to 55.0%,
Mg: 0 to 10.0%,
Si: 0 to 10.0%, and
Zn: 0 to 30.0%,
further comprising at least one of
Ni: 0 to 1.000%,
Ca: 0 to 4.000%,
Sb: 0 to 0.500%,
Pb: 0 to 0.500%,
Cu: 0 to 1.000%,
Sn: 0 to 1.000%,
Ti: 0 to 1.000%,
Cr: 0 to 1.000%,
Nb: 0 to 1.000%,
Zr: 0 to 1.000%,
Mn: 0 to 1.000%,
Mo: 0 to 1.000%,
Ag: 0 to 1.000%,
Li: 0 to 1.000%,
La: 0 to 0.500%,
Ce: 0 to 0.500%,
B: 0 to 0.500%,
Y: 0 to 0.500%,
Sr: 0 to 0.500%,
In: 0 to 0.500%,
Co: 0 to 0.500%,
Bi: 0 to 0.500%,
P: 0 to 0.500%,
W: 0 to 0.500%, and
V: 0 to 0.500% in a total of 5.000% or less, and
a balance: 20.0% or more of Al and impurities,
in a cross-section of the plating layer, an interfacial length L of the plating layer and the base steel sheet and a length L₀ of a surface of the base steel sheet satisfies (L-L₀ )/L₀ ×100≥3, and
the plating layer comprises an Fe-Al phase and a thickness of the Fe-Al phase is 4 to 50 µm.

As explained above, in an Al-based plated steel sheet, to secure post-painting corrosion resistance, in general alloying is necessary. However, an alloyed Al-based plating is relatively hard, and therefore sometimes the cold formability of the plated steel sheet falls. For example, when an alloyed Al-based plating is cold formed, sometimes peeling (also referred to as "powdering") occurs, i.e., the powdering resistance falls. Therefore, in a plated steel sheet provided with a plating layer comprised of an Al-based plating, it is generally difficult to achieve both post-painting corrosion resistance and cold formability, in particular powdering resistance.

Therefore, the inventors studied how to achieve both post-painting corrosion resistance and cold formability in a plated steel sheet provided with a plating layer comprised of an Al-based plating, focusing in particular on the chemical composition, structure, and form of the plating layer. As a result, the inventors discovered that by suitably setting a chemical composition of the plating layer and suitably controlling a thickness of an Fe-Al phase contained in the plating layer and a form of an interface of that plating layer and base steel sheet, it is possible to remarkably improve both the post-painting corrosion resistance and cold formability.

More specifically, first, the inventors discovered that by making an Fe content in the plating layer 20.0 mass% or more while controlling a thickness of an Fe-Al phase contained in that plating layer to 4 µm or more, it is possible to sufficiently alloy the plating layer and thereby possible to improve the post-painting corrosion resistance of the plated steel sheet. On the other hand, the inventors discovered that by controlling the thickness of the Fe-Al phase to 50 µm or less and suppressing excessive hardening of the plating layer, it is possible to improve the cold formability of the plated steel sheet.

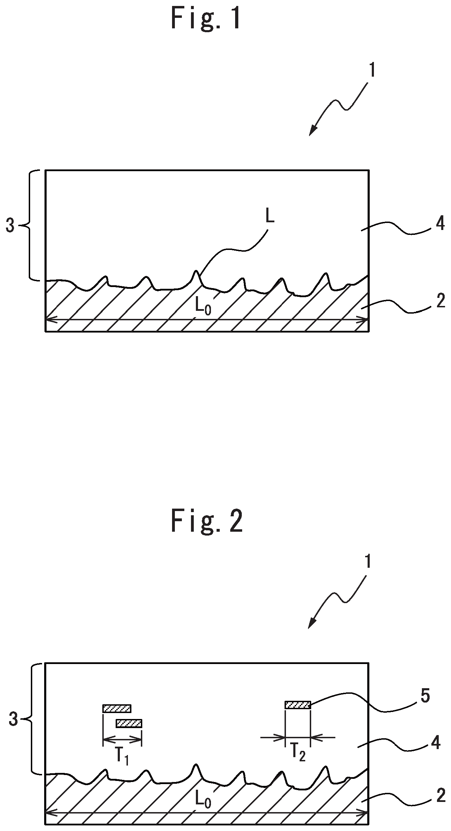

Next, the inventors studied the form of the plating layer so as to further improve the cold formability of the plated steel sheet. As a result, the inventors discovered that by controlling the interfacial shape of the plating layer and base steel sheet to a shape with greater roughness, more specifically by controlling it to a shape with greater roughness where an interfacial length L of the plating layer and base steel sheet and a length L₀ of a surface of the base steel sheet satisfy the relation of (L-L₀ )/L₀ ×100≥3, it is possible to remarkably improve the cold formability of the plated steel sheet. FIG. 1 is a cross-sectional schematic view of a plated steel sheet according to an embodiment of the present invention and shows an interfacial length L of the plating layer and base steel sheet and the length L₀ of the surface of the base steel sheet. If referring to FIG. 1, the plated steel sheet 1 according to an embodiment of the present invention is provided with the base steel sheet 2 and the plating layer 3 formed on the surface of that base steel sheet 2. That plating layer 3 includes an Fe-Al phase 4. In FIG. 1, the interfacial length L of the plating layer 3 and base steel sheet 2 and the length L₀ 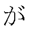 of the surface of the base steel sheet 2 corresponding to the same satisfy the relation of (L-L₀ )/L₀ ×100≥3, i.e., satisfy the relation where the interfacial length L becomes 3% or more longer than the length L₀ of the surface of the base steel sheet 2. Therefore, it can be understood that the interface of the plating layer 3 and the base steel sheet 2 is controlled to a shape with greater roughness.

While not intending to be bound to any specific theory, due to the interface of the plating layer 3 and base steel sheet 2 having a shape with greater roughness as shown in FIG. 1, at the time of bending or other cold forming, it may be that the hard plating layer 3 bites into the base steel sheet 2 starting from the rough parts at the interface and causes the base steel sheet 2 to deform during progression of the cold forming. As a result, it becomes possible to remarkably suppress powdering at the time of bending, etc., i.e., becomes possible to remarkably improve the cold formability of the plated steel sheet 1. On the other hand, if the interface of the plating layer 3 and base steel sheet 2 is a flat shape or a flatter shape with little roughness, at the time of bending or other cold forming, it is not possible to make the hard plating layer 3 bite into the base steel sheet 2 to make the cold forming progress and therefore becomes no longer possible to sufficiently suppress powdering.

Further, the inventors discovered that to create an interfacial shape with greater roughness between the plating layer 3 and base steel sheet 2, it is effective to raise the alloying speed when alloying the plating layer 3. Explained more specifically, first, if excessively containing Si and Mg in the plating layer 3, sometimes they detrimentally affect the alloying of the plating layer 3, and therefore the Si and Mg contents in the plating layer 3 have to be respectively controlled to 10.0 mass% or less. In addition, to raise the alloying speed of the plating layer 3, it is necessary to suitably control the microstructure of the base steel sheet 2 at the time of alloying. More specifically, by rendering the base steel sheet 2 a microstructure suitably decarburized and containing more of the austenite phase at the time of alloying, a reaction is promoted between the plating layer 3 and austenite phase of the base steel sheet 2 at the time of alloying, i.e., it becomes possible to remarkably raise the alloying speed. As explained later in detail in relation to the method of production of the plated steel sheet 1, the inventors discovered that by suitably controlling an annealing step, cooling step, and plating step of the base steel sheet 2, it is possible to create such a microstructure of the base steel sheet 2 suitably decarburized and containing more of the austenite phase. As a result, it is possible to realize an interfacial shape with greater roughness where the interfacial length L of the plating layer 3 and base steel sheet 2 and the length L₀ of the surface of the base steel sheet 2 corresponding to the same satisfy the relation of (L-L₀ )/L₀ ×100≥3 and possible to remarkably improve the cold formability of the plated steel sheet 1.

In particular, the fact that by controlling the Fe-Al phase 4 to within a range of 4 to 50 µm in a suitably alloyed plating layer 3, a sufficient post-painting corrosion resistance is secured and the cold formability is improved and that further by controlling the interfacial shape of the plating layer 3 and the base steel sheet 2 to a shape with greater roughness satisfying the relation of (L-L₀ )/L₀ ×100≥3, it is possible to remarkably improve the cold formability of the plated steel sheet 1 was first clarified by the inventors this time. Therefore, the plated steel sheet according to an embodiment of the present invention is particularly useful in utilization in the field of automobiles where both post-painting corrosion resistance and cold formability are sought.

Below, the plated steel sheet according to an embodiment of the present invention will be explained in more detail. In the following explanation, the "%" of the units of content of the elements will, unless otherwise particularly indicated, mean "mass%". Further, in this Description, the "to" showing a numerical range, unless otherwise particularly indicated, is used in the sense including the numerical values described before and after it as lower limit values and upper limit values.

### [Plating Layer]

According to an embodiment of the present invention, the plating layer is formed on the surface of the base steel sheet, for example, is formed on at least one, preferably both, of the surfaces of the base steel sheet. The plating layer has the following chemical composition.

### [Fe: 20.0 to 55.0%]

If alloying the plated steel sheet, Fe from the base steel sheet will diffuse into the plating layer and alloy with the Al, etc., and therefore the plating layer will inevitably contain Fe. To secure post-painting corrosion resistance, the plated steel sheet has to be suitably alloyed. For this reason, the Fe content is 20.0% or more. The Fe content may also be 25.0% or more, 30.0% or more, 35.0% or more, or 40.0% or more. On the other hand, if the Fe content becomes too high, due to excessive alloying of the plating layer, sometimes the cold formability will fall. Therefore, the Fe content is 55.0% or less. The Fe content may also be 52.0% or less, 50.0% or less, 48.0% or less, or 45.0% or less.

### [Mg: 0 to 10.0%]

Mg is an element effective for improving the corrosion resistance of the plating layer, in particular the chemical convertibility. The Mg content may also be 0%, but to obtain such an effect, the Mg content is preferably 0.2% or more. The Mg content may also be 0.3% or more, 0.5% or more, 0.8% or more, 1.0% or more, 1.5% or more, or 2.0% or more. On the other hand, if excessively containing Mg, sometimes the alloying speed when alloying the plating layer will become slow. In such a case, the desired interfacial shape between the plating layer and base steel sheet will no longer be obtained. Therefore, the Mg content is 10.0% or less. The Mg content may also be 8.0% or less, 6.0% or less, 5.0% or less, 4.0% or less, 3.0% or less, less than 2.5%, 2.4% or less, or 2.2% or less.

### [Si: 0 to 10.0%]

Si is an element effective for improving adhesion of the plating layer. The Si content may also be 0%, but to sufficiently obtain such an effect, the Si content is preferably 0.1% or more. The Si content may also be 0.2% or more, 0.3% or more, 0.5% or more, 0.6% or more, or 0.8% or more. On the other hand, if excessively containing Si, sometimes the alloying speed when alloying the plating layer will become slow. In such a case, the desired interfacial shape between the plating layer and base steel sheet will no longer be obtained. Therefore, the Si content is 10.0% or less. The Si content may also be 8.0% or less, 6.0% or less, 4.0% or less, or 2.0% or less. By further reducing the Si content, it is possible to remarkably suppress or reduce the formation of Fe-Al-based intermetallic compounds containing large amounts of Si, more specifically the formation of an Fe-Al-Si phase containing 3 mass% or more of Si. If an Fe-Al-Si phase is present in a relatively large amount, dissimilar metal corrosion (galvanic corrosion) will sometimes occur with the Fe-Al phase (content of elements other than Fe, Al, and Zn less than 3%). For this reason, from the viewpoint of further improvement of the corrosion resistance, the Si content is preferably 1.0% or less.

### [Zn: 0 to 30.0%]

Zn has a sacrificial corrosion preventive action and is an element effective for improving the corrosion resistance of the plating layer. The Zn content may also be 0%, but to sufficiently obtain such an effect, the Zn content is preferably 1.0% or more. The Zn content may also be 3.0% or more, 5.0% or more, 10.0% or more, 12.0% or more, 15.0% or more, or 18.0% or more. On the other hand, if excessively containing Zn, the Zn remarkably melts at the time of welding of the plated steel sheet and the melted Zn sometimes enters the steel and triggers liquid metal embrittlement (LME) cracking. Therefore, the Zn content is preferably 30.0% or less. The Zn content may also be 28.0% or less, 25.0% or less, 22.0% or less, or 20.0% or less.

Furthermore, the plating layer may optionally contain at least one of Ni: 0 to 1.000%, Ca: 0 to 4.000%, Sb: 0 to 0.500%, Pb: 0 to 0.500%, Cu: 0 to 1.000%, Sn: 0 to 1.000%, Ti: 0 to 1.000%, Cr: 0 to 1.000%, Nb: 0 to 1.000%, Zr: 0 to 1.000%, Mn: 0 to 1.000%, Mo: 0 to 1.000%, Ag: 0 to 1.000%, Li: 0 to 1.000%, La: 0 to 0.500%, Ce: 0 to 0.500%, B: 0 to 0.500%, Y: 0 to 0.500%, Sr: 0 to 0.500%, In: 0 to 0.500%, Co: 0 to 0.500%, Bi: 0 to 0.500%, P: 0 to 0.500%, W: 0 to 0.500%, and V: 0 to 0.500%. These optional elements, while not particularly limited, preferably total 5.000% or less. The optional elements may also total 4.500% or less, 4.000% or less, 3.500% or less, 3.000% or less, 2.500% or less, 2.000% or less, 1.500% or less, 1.000% or less, 0.800% or less, 0.500% or less, 0.100% or less, or 0.050% or less. Below, these optional elements will be explained in detail.

### [Ni: 0 to 1.000%]

Ni is an element effective for improving the corrosion resistance of the plating layer. The Ni content may also be 0%, but to obtain such an effect, the Ni content is preferably 0.001% or more. The Ni content may also be 0.003% or more, 0.005% or more, 0.008% or more, 0.010% or more, or 0.020% or more. The upper limit is not particularly prescribed, but from the viewpoint of production costs, etc., the Ni content is 1.000% or less and may also be for example 0.500% or less, 0.400% or less, 0.300% or less, 0.100% or less, 0.050% or less, or 0.030% or less.

### [Ca: 0 to 4.000%]

Ca is an element effective for securing wettability of the plating bath. The Ca content may also be 0%, but to obtain such an effect, the Ca content is preferably 0.001% or more. The Ca content may also be 0.003% or more, 0.005% or more, or 0.010% or more. On the other hand, if excessively including Ca, sometimes large amounts of hard intermetallic compounds are formed inside the plating layer, the plating layer becomes brittle, and the adhesion with the steel sheet falls. Therefore, the Ca content is preferably 4.000% or less. The Ca content may also be 3.000% or less, 2.000% or less, 1.000% or less, 0.500% or less, 0.300% or less, 0.100% or less, 0.050% or less, or 0.020% or less.

[Sb: 0 to 0.500%, Pb: 0 to 0.500%, Cu: 0 to 1.000%, Sn: 0 to 1.000%, Ti: 0 to 1.000%, Cr: 0 to 1.000%, Nb: 0 to 1.000%, Zr: 0 to 1.000%, Mn: 0 to 1.000%, Mo: 0 to 1.000%, Ag: 0 to 1.000%, Li: 0 to 1.000%, La: 0 to 0.500%, Ce: 0 to 0.500%, B: 0 to 0.500%, Y: 0 to 0.500%, Sr: 0 to 0.500%, In: 0 to 0.500%, Co: 0 to 0.500%, Bi: 0 to 0.500%, P: 0 to 0.500%, W: 0 to 0.500%, and V: 0 to 0.500%]

Sb, Pb, Cu, Sn, Ti, Cr, Nb, Zr, Mn, Mo, Ag, Li, La, Ce, B, Y, Sr, In, Co, Bi, P, W, and V need not be contained in the plating layer, but can be present in the plating layer in amounts of 0.0001% or more, 0.001% or more, or 0.01% or more. These elements do not have a detrimental effect on the performance as a plated steel sheet if within predetermined ranges of content. However, if the contents of the elements are excessive, sometimes the corrosion resistance is made to fall. Therefore, the contents of Sb, Pb, La, Ce, B, Y, Sr, In, Co, Bi, P, W, and V are preferably 0.500% or less and for example may also be 0.300% or less, 0.100% or less, 0.050% or less, or 0.020% or less. Similarly, the contents of Cu, Sn, Ti, Cr, Nb, Zr, Mn, Mo, Ag, and Li are preferably 1.000% or less and for example may also be 0.800% or less, 0.500% or less, 0.100% or less, 0.050% or less, or 0.020% or less.

In the plating layer, the balance other than the above elements is comprised of 20.0% or more of Al and impurities. The Al content may also be, for example, 25.0% or more, 30.0% or more, 35.0% or more, 40.0% or more, 45.0% or more, or 50.0% or more. Similarly, the Al content may for example be 80.0% or less, 75.0% or less, 70.0% or less, 65.0% or less, or 60.0% or less. The "impurities" in the plating layer are constituents entering due to various factors in the production process, such as the raw materials, when producing the plating layer.

### [Measurement of Chemical Composition of Plating Layer]

The chemical composition of the plating layer is determined in the following way. First, an acid solution containing an inhibitor for inhibiting corrosion of the base steel sheet is used to peel off and dissolve the plating layer from the plated steel sheet, then the obtained acid solution is measured by ICP (high frequency inductive coupling plasma) atomic emission spectrometry to determine the chemical composition of the plating layer (average composition). The type of acid is not particularly limited and may be any acid able to dissolve the plating layer. Note that, the chemical composition of the plating layer of the present embodiment is the average obtained by measuring three samples.$\left[\left(L-{L}_{0}\right)/{L}_{0}\times 100\geq 3\right]$

In an embodiment of the present invention, the form of the plating layer is controlled so that in a cross-section of the plating layer, the interfacial length L of the plating layer and the base steel sheet and the length L₀ of the surface of the base steel sheet satisfy the relation of (L-L₀ )/L₀ ×100≥3, i.e., satisfy the relation where the interfacial length L becomes 3% or more longer than the length L₀ of the surface of the base steel sheet. As stated previously in relation to FIG. 1, by having a shape with greater roughness where the interface of the plating layer and base steel sheet satisfies the relation of (L-L₀ )/L₀ ×100≥3, at the time of bending or other cold forming, the hard plating layer bites into the base steel sheet starting from the rough parts at the interface and can cause the base steel sheet to deform during progression of the cold forming. As a result, it becomes possible to remarkably suppress powdering at the time of bending, etc., i.e., becomes possible to remarkably improve the cold formability of the plated steel sheet. To further enhance such an effect, it is preferable to control the interfacial shape of the plating layer and base steel sheet to a shape with greater roughness, i.e., to make (L-L₀ )/L₀ ×100 a larger value. More specifically, the value of (L-L₀ )/L₀ ×100 is preferably 4 or more. For example, it may also be 5 or more, 6 or more, 7 or more, or 8 or more. The upper limit is not particularly prescribed, but, for example, the value of (L-L₀ )/L₀ ×100 may also be 30 or less, 20 or less, 15 or less, 12 or less, or 10 or less.

### [Thickness of Fe-Al Phase: 4 to 50 µm]

In this embodiment of the present invention, the plating layer includes an Fe-Al phase. The thickness of that Fe-Al phase is 4 to 50 µm. In the present invention, the "Fe-Al phase" means a phase having a chemical composition comprised of, by mass%, Fe: 40 to 70%, Al: 30 to 60%, Zn: 0 to 20%, and other elements: less than 3% (i.e., Fe, Al, and Zn: total of more than 97%). By making the Fe content in the plating layer as explained above 20.0 mass% or more while controlling the thickness of the Fe-Al phase contained in that plating layer to 4 µm or more, it is possible to sufficiently alloy the plating layer. Due to this, it is possible to improve the post-painting corrosion resistance of the plated steel sheet. From the viewpoint of further improvement of the post-painting corrosion resistance, the greater the thickness of the Fe-Al phase, the more preferable. For example, it may be 6 µm or more, 8 µm or more, 10 µm or more, 12 µm or more, 14 µm or more, or 16 µm or more. On the other hand, if the Fe-Al phase becomes too thick, sometimes excessive hardening of the plating layer is invited and cold formability of the plated steel sheet is made to fall. Therefore, the thickness of the Fe-Al phase is 50 µm or less. For example, it may be 40 µm or less, 30 µm or less, 25 µm or less, or 20 µm or less.

### [Fe-Al-Si Phase]

$\left[\sum {T}_{i} / {L}_{0} \times 100 \leq 20\right]$

According to a preferred embodiment of the present invention, in a cross-section of the plating layer, the projected lengths Tᵢ of the Fe-Al-Si phase in the plating layer and the length L₀ of the surface of the base steel sheet are controlled to satisfy ΣTᵢ /L₀ ×100≤20. The Fe-Al-Si phase is the Fe-Al-based intermetallic compounds containing relatively large amounts of Si. More specifically, in the present invention, the "Fe-Al-Si phase" means a phase having a chemical composition comprising, by mass%, Fe: 30 to 70%, Al: 30 to 60%, Si: 3 to 20%, and other elements: less than 3%. For this reason, sometimes if the Fe-Al-Si phase is present in a relatively large amount in the plating layer, galvanic corrosion occurs with the Fe-Al phase. Therefore, in a preferred embodiment of the present invention, by ensuring the presence of Fe-Al-Si phase dispersed in the plating layer, i.e., by controlling the projected lengths Tᵢ of the Fe-Al-Si phase in the plating layer and the length L₀ of the surface of the base steel sheet to satisfy ΣTᵢ /L₀ ×100≤20, it becomes possible to further improve the post-painting corrosion resistance of the plated steel sheet.

FIG. 2 is a cross-sectional schematic view of the plated steel sheet according to a preferred embodiment of the present invention and shows the projected lengths Tᵢ of the Fe-Al-Si phase and the length L₀ of the surface of the base steel sheet. Referring to FIG. 2, the plated steel sheet 1 is provided with the base steel sheet 2 and the plating layer 3 formed on the surface of that base steel sheet 2. That plating layer 3 includes an Fe-Al phase 4 and Fe-Al-Si phase 5. Here, the total ΣTᵢ (in FIG. 2, ΣTᵢ =T₁ +T₂ ) of the projected lengths Tᵢ of the Fe-Al-Si phase when projecting it on the surface of the base steel sheet 2 and the length L₀ of the surface of the base steel sheet satisfy ΣTᵢ /L₀ ×100≤20 (i.e., projection rate of Fe-Al-Si phase is 20% or less). For this reason, it can be understood that the Fe-Al-Si phase 5 is present dispersed in the Fe-Al phase 4. As clear from the projected lengths T₁ of FIG. 2, if the projected lengths of several parts of the Fe-Al-Si phase 5 partially overlap, the projected length as a whole, including the overlapped parts, is determined as one projected length. Unlike the case shown in FIG. 2, it may be that even if there are parts of the Fe-Al-Si phase 5 present in layer states in the Fe-Al phase 4, if galvanic corrosion occurs at the contact part of a layer state Fe-Al-Si phase 5 and the Fe-Al phase 4, corrosion will proceed along the contact interface. As a result, the corrosion resistance of the plating layer 3 greatly falls. As opposed to this, in the plated steel sheet 1 according to a preferred embodiment of the present invention, by establishing the presence of the Fe-Al-Si phase 5 dispersed in the Fe-Al phase 4 so as to satisfy ΣTᵢ /L₀ ×100≤20, even if galvanic corrosion occurs at the contact part of one or more parts of the Fe-Al-Si phase 5 and the Fe-Al phase 4 present in the surroundings, no corrosion proceeds to other parts of the Fe-Al-Si phase 5 starting from corrosion at that contact part and therefore the corrosion resistance of the plated steel sheet 1, in particular the post-painting corrosion resistance, can be further improved.

By controlling the Si content in the plating layer, it is possible to reliably reduce the value of the projection ratio of the Fe-Al-Si phase of the value ΣTᵢ /L₀ ×100. For example, by controlling the Si content in the plating layer to 1.0% or less, ΣTᵢ /L₀ ×100≤20 can be reliably satisfied. From the viewpoint of the further enhancement of the effect of improvement of the corrosion resistance, the lower the value of ΣTᵢ /L₀ ×100, the more preferable. For example, it may be 15 or less, 10 or less, 5 or less, 3 or less, 2 or less, or 1 or less. From the viewpoint of the still further corrosion resistance, the Fe-Al-Si phase 5 may also not be present in the plating layer. That is, the lower limit of ΣTᵢ /L₀ ×100 may be 0. While not particularly limited, for example the value of ΣTᵢ /L₀ ×100 may also be 0.1 or more, 0.2 or more, or 0.3 or more.

### [Surface Coverage Rate of Mg-Containing Phase: 20 to 100%]

According to another preferred embodiment of the present invention, the Mg content in the plating layer is 0.3 to 10.0%. In relation to this, the plating layer further contains an Mg-containing phase. In a cross-section of the plating layer, the surface coverage rate of that Mg-containing phase is controlled to 20 to 100%. In the present invention, the "Mg-containing phase" means a phase having a chemical composition comprising, by mass%, Mg: 0.5 to 90%, Al: 10 to 99.5%, O: 0 to 70%, Fe: 0 to 3%, and other elements: less than 3%. As clear from that chemical composition, the Mg-containing phase does not encompass the later explained MgZn₂ phase.

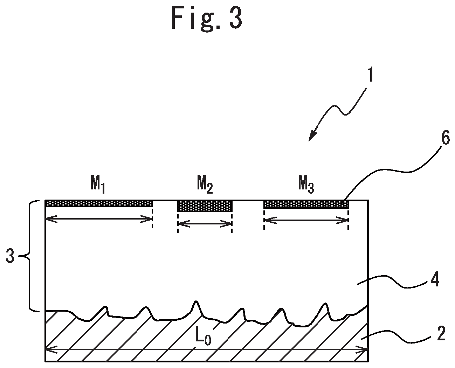

FIG. 3 is a cross-sectional schematic view of the plated steel sheet according to another preferred embodiment of the present invention and explains the surface coverage rate of the Mg-containing phase. Referring to FIG. 3, the plated steel sheet 1, like the case of FIGS. 1 and 2, is provided with the base steel sheet 2 and the plating layer 3 formed on the surface of that base steel sheet 2 wherein that plating layer 3 includes an Fe-Al phase 4. In FIG. 3, the plating layer 3 further contains an Mg-containing phase 6 at its surface part. Here, it can be understood that the total ΣTᵢ (in FIG. 3, ΣMᵢ =M₁ +M₂ +M₃ ) of the lengths Mi of the Mg-containing phase 6 and the length L₀ of the surface of the base steel sheet 2 satisfy ΣMᵢ /L₀ ×100≥20, i.e., the surface coverage rate of the Mg-containing phase satisfies 20% or more. By controlling the surface coverage rate of the Mg-containing phase to 20% or more to ensure the presence of Mg at the plating layer surface in a relatively large amount, it is possible to promote a reaction by the action of Mg at the time of chemical conversion and becomes possible to improve the deposition of the chemical conversion coating on the plated steel sheet. From the viewpoint of the further enhancement of the effect of improvement of the chemical convertibility, the higher the surface coverage rate of the Mg-containing phase, the more preferable. For example, it may be 30% or more, 40% or more, 50% or more, 60% or more, 70% or more, or 80% or more. The upper limit is not particularly prescribed. The surface coverage rate of the Mg-containing phase may also be 100%. For example, the surface coverage rate of the Mg-containing phase may also be 95% or less or 90% or less. To raise the surface coverage rate of the Mg-containing phase, the Mg content in the plating layer is preferably increased. More specifically, the Mg content in the plating layer is preferably 0.3% or more, more preferably 0.6% or more. However, the surface coverage rate of the Mg-containing phase does not depend solely on the Mg content, and therefore the Mg content in the plating layer may be suitably determined in accordance with the desired surface coverage rate while considering also the production conditions.

### [Area Ratio of MgZn₂ Phase: Less Than 10%]

In an embodiment of the present invention, along with the upper limit of the Zn content of the plating layer being 30.0%, in that plating layer, sometimes the MgZn₂ phase is formed in a range of, by area%, less than 10%. The MgZn₂ phase may be contained in the plating layer or may not be contained there. If the MgZn₂ phase is contained in the plating layer, it can contribute to improvement of the sacrificial corrosion prevention property. The area ratio of the MgZn₂ phase may for example be 9% or less, 7% or less, 5% or less, or 3% or less. Similarly, the area ratio of the MgZn₂ phase may also be 0%. For example, it may be for example 1% or more or 2% or more.

### [Analysis of Plating Layer]

The plating layer is analyzed in the following way. First, to enable a cross-section of the plating layer to be observed, a sample of 15 mm×20 mm is taken from the surface of the plated steel sheet. The obtained sample is buried in a resin and then polished. Next, the obtained sample in the polished mirror surface state is scanned in a field of 80 µm in the thickness direction and 100 µm in a direction perpendicular to the thickness direction by a scan type electron microscope equipped with an electron probe microanalyzer (SEM-EPMA) obtain a backscattered electron image (BSE image). The plating layer is identified from that BSE image. Next, the compositions of the phases in the identified plating layer are analyzed at points. From the obtained compositions, an Fe-Al phase (Fe: 40 to 70%, Al: 30 to 60%, Zn: 0 to 20%, and other elements: less than 3%), Fe-Al-Si phase (Fe: 30 to 70%, Al: 30 to 60%, Si: 3 to 20%, and other elements: less than 3%), Mg-containing phase (Mg: 0.5 to 90%, Al: 10 to 99.5%, O: 0 to 70%, Fe: 0 to 3%, and other elements: less than 3%), and MgZn₂ phase are identified. The specific measurement conditions of the EPMA in the above field are as follows:
Apparatus: JXA-8500 made by JEOL
Acceleration voltage: 15 kV
Emitted current: 5×10^{- 7} A
Emission time: 50 ms

(L-L₀ )/L₀ ×100 is determined in the following way. First, the obtained sample in the polished mirror surface state is scanned in a field of 80 µm in the thickness direction and 100 µm in a direction perpendicular to the thickness direction by an SEM to obtain a BSE image. That BSE image is measured for interfacial length of the plating layer and base steel sheet (interfacial length L of plating layer and base steel sheet shown in FIG. 1) using the "Analyze" function of the image analysis software "ImageJ". The above operation is performed for five fields and the average value is calculated to obtain the interfacial length L. Next, from the obtained interfacial L and the corresponding length L₀ of a surface of the base steel sheet, i.e., the length of the long side of the observed field: 100 µm, (L-L₀ )/L₀ ×100 is determined. The resolution of the SEM image is 2560×1920. In measurement of L₀ , "Find edge" of the "Process" function in the image analysis software "ImageJ" is used. The "Binary" function is used to binarize the image, then the "Measure" function in "Analyze" is used to read the "Perim.".

The thickness of the Fe-Al phase is determined as follows. First, the thickness of the Fe-Al phase identified above is measured using the "Analyze" function of the image analysis software "ImageJ" at five points in the field. Next, the thicknesses of the five points measured are averaged to determine the thickness of the Fe-Al phase.

ΣTᵢ /L₀ ×100 (projection ratio of Fe-Al-Si phase) is determined in the following way. First, the Fe-Al-Si phase identified above is projected on the surface of the base steel sheet using the image analysis software "ImageJ" and the total ΣTᵢ (in FIG. 2, T₁ +T₂ ) of the projected lengths Tᵢ of the Fe-Al-Si phase are calculated. Specifically, "Straight" of the tool bar in ImageJ is used to draw straight lines in the horizontal directions of the Fe-Al-Si phase then the values displayed in "Length" of the tool bar are read to measure Tᵢ. Next, ΣTᵢ /L₀ ×100 (projection rate of Fe-Al-Si phase) is determined from the calculated ΣTᵢ and the length L₀ of the corresponding surface of the base steel sheet (length of long side of observed field: 100 µm).

The surface coverage rate of the Mg-containing phase is determined as follows: First, the total ΣMᵢ (in FIG. 3, ΣMᵢ =M₁ +M₂ +M₃ ) of the lengths Mi of the Mg-containing phase present at the surface layer part of the plating layer in the Mg-containing phases identified above is calculated using the "Analyze" function of the image analysis software "ImageJ". Specifically, "Straight" of the tool bar in ImageJ is used to draw straight lines in the horizontal directions at the two ends of the parts of the Mg-containing phase. At that time, the value displayed at "Length" of the tool bar is read to thereby measure Mᵢ . Next, ΣMᵢ /L₀ ×100 (surface coverage rate of Mg-containing phase) is determined from the calculated ΣMᵢ and the length L₀ of corresponding surface of the base steel sheet (length of long side of observed field: 100 µm).

The area ratio of the MgZn₂ phase is measured by the image analysis software "ImageJ" from the elemental distribution maps of mapping images obtained in the above samples. Specifically, regions in the element mapping in which Mg is contained in 25 to 45 at% and Zn in 50 to 75 at% (Mg+Zn: 90 to 100 at%) are contained are binarized by the "Binary" function of "ImageJ" and the area ratio is measured by the "Analyze".

As the plating layer, any plating layer having the above chemical composition, Fe-Al phase, Fe-Al-Si phase, Mg-containing phase, and/or MgZn₂ phase is acceptable. It is not particularly limited, but for example may be an alloyed hot dip coating layer, etc.

### [Preferable Chemical Composition of Base Steel Sheet]

The present invention, as explained above, has as its object the provision of a plated steel sheet provided with an Al-containing plating layer which has improved post-painting corrosion resistance and cold formability and achieves that object by suitably setting the chemical composition of the plating layer, controlling the thickness of the Fe-Al phase contained in the plating layer to within a range of 4 to 50 µm, and controlling the interfacial shape of the plating layer and the base steel sheet so as to satisfy the relation of (L-L₀ )/L₀ ×100≥3. Therefore, it is clear that the chemical composition itself of the base steel sheet is not an essential technical feature in achieving the object of the present invention. Below, the preferable chemical composition of the base steel sheet used in the plated steel sheet according to an embodiment of the present invention will be explained in detail, but these explanations are intended merely to illustrate the preferred chemical composition of the base steel sheet and are not intended to limit the present invention to ones using a base steel sheet having such a specific chemical composition.

In an embodiment of the present invention, for example, the base steel sheet preferably has a chemical composition comprising, by mass%,
C: 0.01 to 0.50%,
Si: 0.001 to 3.000%,
Mn: 0.10 to 3.00%,
Al: 0.0002 to 2.000%,
P: 0.100% or less,
S: 0.1000% or less,
N: 0.0100% or less,
Nb: 0 to 0.15%,
Ti: 0 to 0.15%,
V: 0 to 0.15%,
Mo: 0 to 1.0%,
Cr: 0 to 1.0%,
Cu: 0 to 1.0%,
Ni: 0 to 1.0%,
B: 0 to 0.0100%,
W: 0 to 1.000%,
Hf: 0 to 0.050%,
Mg: 0 to 0.050%,
Zr: 0 to 0.050%,
Ca: 0 to 0.010%,
REM: 0 to 0.30%,
Ir: 0 to 1.000%, and
a balance of Fe and impurities.

Below, the elements will be explained in more detail.

### [C: 0.01 to 0.50%]

C is an element inexpensively making the tensile strength increase and an important element for controlling the strength of the steel. To sufficiently obtain such an effect, the C content is preferably 0.01% or more. The C content may also be 0.05% or more, 0.10% or more, 0.15% or more, 0.20% or more, 0.30% or more, or 0.35% or more. On the other hand, if excessively containing C, a drop in the elongation is sometimes invited. For this reason, the C content is preferably 0.50% or less. The C content may also be 0.45% or less or 0.40% or less.

### [Si: 0.001 to 3.000%]

Si is an element acting as a deoxidizing agent and suppressing the precipitation of carbides in the cooling process during annealing of the cold rolled sheet. To sufficiently obtain such an effect, the Si content is preferably 0.001% or more. The Si content may also be 0.010% or more, 0.100% or more, or 0.200% or more. On the other hand, if excessively containing Si, along with an increase in steel strength, a drop in elongation is sometimes invited. Therefore, the Si content is preferably 3.000% or less. The Si content may also be 2.500% or less, 2.000% or less, 1.500% or less, or 1.000% or less.

### [Mn: 0.10 to 3.00%]

Mn is an element raising the hardenability of the steel and an element effective for raising strength. To sufficiently obtain such an effect, the Mn content is preferably 0.10% or more. The Mn content may also be 0.30% or more, 0.50% or more, 1.00% or more, or 1.30% or more. On the other hand, if excessively containing Mn, along with an increase in steel strength, a drop in elongation is sometimes invited. Therefore, the Mn content is preferably 3.00% or less. The Mn content may also be 2.80% or less, 2.50% or less, or 2.00% or less.

### [Al: 0.0002 to 2.000%]

Al is an element acting as a deoxidizing agent of the steel and having the action of making the steel sounder. To sufficiently obtain such an effect, the Al content is preferably 0.0002% or more. The Al content may also be 0.001% or more, 0.010% or more, 0.050% or more, or 0.100% or more. On the other hand, if excessively containing Al, coarse Al oxides are formed and sometimes the elongation of the steel falls. For this reason, the Al content is preferably 2.000% or less. The Al content may also be 1.500% or less, 1.000% or less, 0.800% or less, or 0.500% or less.

### [P: 0.100% or Less]

P is an element segregating at grain boundaries and promoting embrittlement of the steel. The less the P content, the more preferable, and therefore ideally it is 0%. However, excessive reduction of the P content sometimes invites a large increase in costs. For this reason, the P content may be 0.0001% or more and may also be 0.001% or more or 0.005% or more. On the other hand, if excessively including P, as explained above, grain boundary segregation sometimes invites embrittlement of the steel. Therefore, the P content is preferably 0.100% or less. The P content may also be 0.050% or less, 0.030% or less, or 0.010% or less.

### [S: 0.1000% or Less]

S is an element forming MnS and other nonmetallic inclusions in the steel and inviting a drop in ductility of the steel part. The less the S content, the more preferable, and therefore ideally it is 0%. However, excessive reduction of the S content sometimes invites a large increase in costs. For this reason, the S content may be 0.0001% or more and may also be 0.0002% or more, 0.0010% or more, or 0.0050% or more. On the other hand, if excessively including S, at the time of cold forming, sometimes occurrence of cracking is invited starting from the nonmetallic inclusions. Therefore, the S content is preferably 0.1000% or less. The S content may also be 0.0500% or less, 0.0200% or less, or 0.0100% or less.

### [N: 0.0100% or Less]

N is an element forming coarse nitrides in the steel sheet and causing the workability of the steel sheet to fall. The less the N content, the more preferable, and therefore ideally it is 0%. However, excessive reduction of the N content sometimes invites a large increase in costs. For this reason, the N content may be 0.0001% or more and may also be 0.0005% or more or 0.0010% or more. On the other hand, if excessively containing N, as mentioned above, sometimes coarse nitrides are formed and the workability of the steel sheet is made to fall. Therefore, the N content is preferably 0.0100% or less. The N content may also be 0.0080% or less or 0.0050% or less.

The preferred basic chemical composition of the base steel sheet is as explained above. Further, the base steel sheet may, in accordance with need, contain in place of part of the balance of Fe, one or more elements selected from the group comprising Nb: 0 to 0.15%, Ti: 0 to 0.15%, V: 0 to 0.15%, Mo: 0 to 1.0%, Cr: 0 to 1.0%, Cu: 0 to 1.0%, Ni: 0 to 1.0%, B: 0 to 0.0100%, W: 0 to 1.000%, Hf: 0 to 0.050%, Mg: 0 to 0.050%, Zr: 0 to 0.050%, Ca: 0 to 0.010%, REM: 0 to 0.30%, and Ir: 0 to 1.000%. These elements may be respectively contained in 0.0001% or more, 0.0005% or more, 0.001% or more, or 0.01% or more.

In the base steel sheet, the balance besides the above elements is comprised of Fe and impurities. The "impurities" in the base steel sheet are constituents entering due to various factors in the production process, such as the ore, scrap, and other raw materials, when industrially producing the base steel sheet.

The chemical composition of the base steel sheet may be measured by a general method of analysis. For example, the chemical composition of the base steel sheet may be measured by first mechanically grinding it to remove the plating layer, then applying ICP-AES (inductively coupled plasma-atomic emission spectrometry) to the cuttings based on JIS G 1201: 2014. Specifically, for example, it can be identified by taking a 35 mm square test piece from near the sheet thickness 1/2 position of the base steel sheet and measuring it by a ICPS-8100 made by Shimadzu, etc. (measurement device) under conditions based on calibration curves prepared in advance. Of the elements which cannot be measured by ICP-AES, C and S can be measured using the combustion-infrared absorption method, N using the inert gas melting-thermal conductivity method, and O using the inert gas melting-nondispersive infrared absorption method.

### [Thickness of Base Steel Sheet]

The thickness of the base steel sheet is not particularly limited, but for example is 0.2 mm or more and may also be 0.3 mm or more, 0.6 mm or more, 1.0 mm or more, or 2.0 mm or more. Similarly, the thickness of the base steel sheet is for example 6.0 mm or less and may also be 5.0 mm or less or 4.0 mm or less.

### <Method of Production of Plated Steel Sheet>

Next, a preferred method of production of the plated steel sheet according to an embodiment of the present invention will be explained. The following explanation is intended to illustrate the characteristic method for producing the plated steel sheet according to an embodiment of the present invention and is not intended to limit the plated steel sheet to one produced by the method of production explained below.

The plated steel sheet according to an embodiment of the present invention can be produced by for example performing a casting step of casting molten steel adjusted in chemical composition to form a steel slab, a hot rolling step of hot rolling the steel slab to obtain a hot rolled steel sheet, a coiling step of coiling the hot rolled steel sheet, a cold rolling step of cold rolling the coiled hot rolled steel sheet to obtain a cold rolled steel sheet, a pretreatment step, an annealing step of annealing the pretreated cold rolled steel sheet, a cooling step of cooling the annealed cold rolled steel sheet, and a plating step of forming a plating layer on the obtained base steel sheet. Alternatively, it is also possible to perform the cold rolling step as pickled without coiling after the hot rolling step. Below, each step will be explained in detail.

### [Casting Step]

The conditions of the casting step are not particularly limited. For example, the casting may be performed by the method of smelting by a blast furnace, electric arc furnace, etc., then performing various types of secondary refining, then casting by usual continuous casting, ingot making, etc.

### [Hot Rolling Step]

The cast steel slab can be hot rolled to obtain a hot rolled steel sheet. The hot rolling step is performed by hot rolling the cast steel slab directly or after cooling once, then reheating. When performing the reheating, the heating temperature of the slab may, for example, be 1100 to 1250°C. In the hot rolling step, usually rough rolling and finish rolling are performed. The temperatures and rolling reductions of the rolling operations can be suitably determined in accordance with the desired microstructure or sheet thickness. For example, the end temperature of the finish rolling may be 900 to 1050°C and the rolling reduction of the finish rolling may be 10 to 50%.

### [Coiling Step]

The hot rolled steel sheet can be coiled at a predetermined temperature. The coiling temperature can be suitably determined in accordance with the desired microstructure, etc., and for example may be 500 to 800°C. Before coiling or after coiling, then uncoiling, the hot rolled steel sheet may be subjected to predetermined heat treatment. Alternatively, the coiling step need not be performed, but the sheet may be pickled after the hot rolling step, then subjected to the later explained cooling step.

### [Cooling Step]

After the hot rolled steel sheet is pickled, etc., the hot rolled steel sheet can be cold rolled to obtain a cold rolled steel sheet. The rolling reduction of the cold rolling can be suitably determined in accordance with the desired microstructure and sheet thickness and for example may be 20 to 80%. After the cold rolling step, the sheet may for example be air-cooled to cool it down to room temperature

### [Pretreatment Step]

Next, the cold rolled steel sheet may be subjected to a pretreatment step before annealing. As such a pretreatment step, degreasing may be included. The degreasing may for example include running a current through the cold rolled steel sheet in a solution of pH8.0 or more (electrolysis). The current density at the time of running the current may be 1.0 to 8.0A/dm² and the current running time may be 5 to 10 seconds.

### [Annealing Step]

Next, the obtained cold rolled steel sheet is annealed. The annealing step includes heating the cold rolled steel sheet in an atmosphere of a dew point of -10 to 10°C to a temperature of 780 to 900°C and holding it there for 10 to 300 seconds. By performing the annealing step under such conditions, it is possible to suitably decarburize the surface layer part of the cold rolled steel sheet. In this case, a reaction is promoted between the plating layer and base steel sheet at the time of alloying in the subsequent plating step, i.e., the alloying speed can be raised. As a result, it is possible to realize an interfacial shape with a greater roughness where the interfacial length L of the plating layer and base steel sheet and the length L₀ of the surface of the base steel sheet corresponding to this satisfy the relation of (L-L₀ )/L₀ ×100≥3 and thereby becomes possible to remarkably improve the cold formability of the plated steel sheet.

If the dew point is lower than -10°C, the annealing temperature is lower than 780°C, and/or the annealing time is shorter than 10 seconds, the surface layer part of the cold rolled steel sheet becomes insufficiently decarburized and it becomes no longer possible to obtain a sufficient alloying speed at the time of alloying of the plating layer. As a result, it becomes no longer possible to realize an interfacial shape satisfying (L-L₀ )/L₀ ×100≥3 between the plating layer and base steel sheet. On the other hand, if the dew point is more than 10°C, the heating temperature is more than 900°C, and/or the annealing time is more than 300 seconds, sometimes the surface of the base steel sheet is formed with an external oxide layer and the plateability falls or excessive decarburization causes the finally obtained plated steel sheet to fall in strength. The atmosphere in the annealing step may be a reducing atmosphere, more specifically a reducing atmosphere containing nitrogen and hydrogen, for example, a reducing atmosphere containing 1 to 10% of hydrogen (for example, hydrogen 3% and balance nitrogen).

### [Cooling Step]

The cold rolled steel sheet with the surface layer part decarburized in the annealing step has to be suitably cooled in the next cooling step so as to obtain the desired surface layer part structure. Specifically, the cooling step includes cooling by an average cooling speed of 5°C/s or more from the heating temperature of the annealing step (annealing temperature) down to the control temperature of 500 to 750°C. This will be explained in detail below:

In general, an annealed cold rolled steel sheet is next cooled once to a temperature of less than 500°C, for example, a temperature of about 200°C, then reheated and plated. However, if going through such a temperature history, the microstructure transformed to austenite in the annealing step transforms to bainite, martensite, or other structures. Therefore, in the subsequent plating step, the bainite, martensite, or other phases of the microstructure and the plating layer become alloyed. However, the alloying speed is relatively slow between these phases of the microstructure and the plating layer, and therefore in the finally obtained plated steel sheet, it becomes no longer possible to realize an interfacial shape satisfying the relation of (L-L₀ )/L₀ ×100≥3 between the plating layer and the base steel sheet. Therefore, in the cooling step in the present method of production, it becomes extremely important to dip the cold rolled steel sheet with the surface layer part decarburized in the annealing step in a plating bath while maintaining the state with the microstructure containing a larger amount of the austenite phase and to make the austenite phase and plating layer directly be alloyed. In relation to this, in the cooling step, by cooling by an average cooling speed of 5°C/s or more from the annealing temperature to the control temperature of 500 to 750°C, it is possible to maintain the microstructure of the cold rolled steel sheet in a state containing a larger amount of the austenite phase. As a result, it becomes possible to make the austenite phase and plating layer directly alloy in the subsequent plating step and realize an alloying speed sufficient for realizing the desired interfacial shape.

While not intending to be bound by any specific theory, by making the alloying speed faster by the combination of decarburization and the austenite phase, unevenness of alloying speed arises between places with austenite grain boundaries and places without austenite grain boundaries. It may be that due to such unevenness of alloying speed, rough shapes are formed at the interface of the plating layer and base steel sheet. If the control temperature is less than 500°C, the austenite phase transforms to bainite or martensite and, in the subsequent plating step, a sufficient alloying speed can no longer be achieved. Further, if the average cooling speed from the annealing temperature to the control temperature of 500 to 750°C is less than 5°C/s, there is remarkable transformation to ferrite and similarly a sufficient alloying speed can no longer be achieved in the subsequent plating step. As a result, in either case, it becomes no longer possible to realize an interfacial shape where the relation of (L-L₀ )/L₀ ×100≥3 is satisfied between the plating layer and base steel sheet. On the other hand, if the control temperature becomes more than 750°C, it becomes higher than a temperature suitable for the subsequent plating step and sometimes the desired plating layer cannot be obtained. From the viewpoint of realizing an interfacial shape with greater roughness, the higher the average cooling speed from the annealing temperature to the control temperature of 500 to 750°C, the more preferable. For example, 15°C/s or more is preferable. The upper limit is not necessarily prescribed, but that average cooling speed is preferably for example 30°C/s or less.

### [Plating Step]

Next, in the plating step, at least one surface, preferably both, of the cold rolled steel sheet (base steel sheet) is formed with a plating layer. More specifically, the plating step is performed by dipping the above-mentioned cold rolled steel sheet cooled down to the control temperature in a plating bath having a predetermined chemical composition (plating bath temperature: for example, 680 to 750°C) while maintaining a state including a larger amount of the austenite phase, then heat treating it at an alloying temperature of 680 to 750°C over 0.5 to 20 seconds. By performing alloying under such conditions, it is possible to suitably alloy the plating layer so that the thickness of the Fe-Al phase becomes 4 µm or more and realize a sufficient alloying speed based on the combination of decarburization and austenite phases. As a result, it is possible to realize an interfacial shape with greater roughness where the interfacial length L of the plating layer and base steel sheet and the length L₀ of the surface of the base steel sheet corresponding to the same satisfy (L-L₀ )/L₀ ×100≥3 and thereby possible to remarkably improve the cold formability of the plated steel sheet.

If the alloying temperature is lower than 680°C, the plating layer solidifies in the state with insufficient alloying and the Fe content in the plating layer falls and/or the desired Fe-Al phase thickness can no longer be obtained. As a result, the post-painting corrosion resistance of the plated steel sheet falls. Further, if the alloying time is shorter than 0.5 second, the plating layer is insufficiently alloyed and the interface of the plating layer and the base steel sheet cannot be rendered a rough shape and/or the desired Fe-Al phase thickness can no longer be obtained. As a result, the cold formability and/or post-painting corrosion resistance of the plated steel sheet falls. On the other hand, if the alloying temperature is higher than 750°C or the alloying time is longer than 20 seconds, the alloying of the plating layer will excessively proceed and, due to this, the interface of the plating layer and base steel sheet will become a flatter shape with less roughness and, in the finally obtained plated steel sheet, sometimes the relation of (L-L₀ )/L₀ ×100≥3 will no longer be satisfied. In this case, the cold formability of that plated steel sheet will fall. From the viewpoint of reliably obtaining the desired alloying, the alloying time is preferably 5 to 20 seconds.

The plating step is for example performed by hot dip coating. The plating is not limited to hot dip coating. Electroplating, vapor deposition plating, thermal spraying, cold spraying, etc., are also possible. The other conditions in the plating step may be suitably set considering the thickness and amount of deposition, etc., of the plating layer. For example, the cold rolled steel sheet can be dipped in a plating bath, then pulled up and immediately sprayed by N₂ gas or air by gas wiping, then cooled so as to adjust the amount of deposition of the plating layer to within a predetermined range, for example, a range where the thickness of the Fe-Al phase becomes 4 to 50 µm.

### [Cooling After Plating]

Finally, by cooling the base steel sheet on which the plating layer is deposited, the plated steel sheet according to an embodiment of the present invention is obtained. The cooling after plating is not particularly limited and can be performed under any suitable conditions known to persons skilled in the art. For example, the cooling after plating can be performed by an average cooling speed of 10°C/s or more. The cooling stop temperature is also not particularly limited. For example, it may be suitably set in the range of 100 to 350°C.

According to the present method of production, it is possible to produce a plated steel sheet provided with a plating layer with a chemical composition of the plating layer suitably set to within a predetermined range, i.e., by mass%, Fe: 20.0 to 55.0%, Mg: 0 to 10.0%, Si: 0 to 10.0%, and Al: 20.0% or more, with a thickness of the Fe-Al phase contained in the plating layer controlled to within a range of 4 to 50 µm, and further with an interfacial shape of the plating layer and base steel sheet controlled to satisfy the relation of (L-L₀ )/L₀ ×100≥3. Therefore, it is possible to secure a sufficient post-painting corrosion resistance due to the Fe-Al phase in the suitably alloyed plating layer and improve the cold formability. In addition, by controlling the interfacial shape of the plating layer and base steel sheet to a shape with greater roughness, even when subjected to bending or other cold forming, it is possible to make the hard plating layer bite into the base steel sheet starting from the rough parts of the interface to make the base steel sheet deform while making the cold forming progress. As a result, it becomes possible to remarkably suppress the occurrence of powdering due to bending, etc., i.e., becomes possible to remarkably improve the cold formability of the plated steel sheet. In addition, by suitably controlling the Si content in the plating layer, it is possible to ensure the presence of the Fe-Al-Si phase dispersed in the Fe-Al phase and thereby further improve the post-painting corrosion resistance of the plated steel sheet. Further, by suitably controlling mainly the Mg content in the plating layer, it is possible to raise the surface coverage rate of the plating layer by the Mg-containing phase and thereby becomes possible to remarkably improve the chemical convertibility of the plated steel sheet. Therefore, according to such a plated steel sheet, it becomes possible to realize more excellent post-painting corrosion resistance and cold formability compared with a conventional plated steel sheet. For this reason, it is possible to contribute to development of industry through improvement in productivity in use as a plated steel sheet for automobiles or building materials.

Below, examples will be used to explain the present invention in more detail, but the following examples are merely illustrations of the present invention. The present invention is not limited to these examples in any way. The present invention can be freely changed within a scope not deviating from the gist of the present invention needless to say.

### EXAMPLES

In the following examples, plated steel sheets according to embodiments of the present invention were produced under various conditions and the properties of the produced plated steel sheets were investigated.

First, in each case, molten steel was cast by continuous casting to form a slab having a chemical composition comprising, by mass%, C: 0.20%, Si: 0.012%, Mn: 1.30%, Al: 0.030%, P: 0.005%, S: 0.0020% and N: 0.0030% and having a balance of Fe and impurities, cooling the slab once, then reheating it to 1200°C and hot rolling it, then coiling it at a temperature of 600°C or less. The hot rolling was performed by performing rough rolling and finish rolling. The end temperature of the finish rolling was 900 to 1050°C and the rolling reduction of the finish rolling was 30%. Next, the obtained hot rolled steel sheet was pickled, then was cold rolled by a rolling reduction of 50% to obtain a cold rolled steel sheet having a sheet thickness of 0.8 mm. Next, the obtained cold rolled steel sheet was pretreated by running a current of a current density of 5.0A/dm² in a solution of a pH9.2 for 8 seconds (degreasing).

Next, each cold rolled steel sheet was cut to a size of 100 mm×200 mm, then annealed under the conditions shown in Table 1 (annealing atmosphere: hydrogen 3% and nitrogen balance). Next, the cut steel sheet sample was cooled from the annealing temperature down to the control temperature by the average cooling speed shown in Table 1, then was dipped in a hot dip coating bath (coating bath temperature: 680 to 750°C) having a predetermined bath composition and alloyed under the conditions shown in Table 1. The amount of plating deposition was adjusted after dipping in the coating bath by pulling up the steel sheet sample and wiping it by N₂ gas. Finally, the base steel sheet with the adhered plating layer was cooled by an average cooling speed of 10°C/s or more to thereby obtain a plated steel sheet formed with a plating layer at both surfaces of the base steel sheet.

The physical properties and characteristics of the obtained plated steel sheets were measured and evaluated by the following methods:

### [Analysis of Chemical Composition of Plating Layer]

The chemical composition of the plating layer was determined by dipping a sample cut to 30 mm×30 mm in a 10% HCl aqueous solution containing ibit 710K (made by Asahi Chemical Industry Co., Ltd.) in a concentration of 0.04% as an inhibitor to pickle and peel off the plating layer, then the plating constituents dissolved in the aqueous solution were measured by ICP atomic emission spectrometry. The results are shown in Table 1.

### [Evaluation of Cold Formability]

The cold formability was evaluated as follows. First, a 100×50 mm×0.8 mm sample of the plated steel sheet was subjected to an R=2 mm 90° bending test, then was cleaned ultrasonically and measured for sample mass. The difference from the sample mass before the 90° bending test was measured as the amount of powdering. The cold formability, in particular the powdering resistance, was evaluated in the following way.
AAA: 6 mg or less
AA: more than 6 to 12 mg
A: more than 12 to 24 mg
B: more than 24 mg

### [Evaluation of Post-Painting Corrosion Resistance]

The post-painting corrosion resistance was evaluated in the following way. First, a 50 mm×100 mm sample of the plated steel sheet was treated by Zn phosphate (SD5350 System: standard of Nippon Paint Industrial Coating), then was painted by electrodeposition (PN110 Powernics Gray: standard of Nippon Paint Industrial Coating) to 20 µm and was baked at a temperature of 150°C and 20 minutes. Next, a cut was made at the center of the sample reaching the base iron (base steel sheet). A cycle corrosion test in accordance with JASO (M609-91) was performed for 180 cyclesto measure the paint blister width. The post-painting corrosion resistance was evaluated as follows:
AAA: 2 mm or less
AA: more than 2 to 3 mm
A: more than 3 to 4 mm
B: more than 4 mm

### [Evaluation of Chemical Convertibility]

The chemical convertibility was evaluated as follows: First, a 50 mm×100 mm sample of the plated steel sheet was treated by Zn phosphate (SD5350 System: standard of Nippon Paint Industrial Coating) to form a chemical conversion coating. Next, the same surface was examined by a secondary electron image of an SEM and the area ratio of parts not formed with a chemical conversion coating, called "bald spots", was measured. The chemical convertibility of the plated steel sheet was evaluated in accordance with the area ratio of bald spots by the following evaluation criteria.
AA: bald spot area ratio 0 to 5%
A: bald spot area ratio more than 5 to 15%
B: bald spot area ratio more than 15%

A case where the cold formability is evaluated as AAA, AA, and A and the post-painting corrosion resistance is evaluated as AAA, AA, and A was evaluated as a plated steel sheet having improved post-painting corrosion resistance and cold formability. The results are shown in Table 1.

### [Table 1-1]

**Table 1-1**

| No | Class | Plating layer | | | | | | Production conditions | | | | | | | |
|---|---|---|---|---|---|---|---|---|---|---|---|---|---|---|---|
| | | Chemical composition (mass%) | | | | | | Annealing step | | | | Cooling step | | Plating step | |
| | | Al | Mg | Si | Fe | Other elements | | Annealing temp. (°C) | Anneal-ng time (s) | Hydrogen conc. (%) | Dew point (°C) | Average cooling speed from annealing temp. to control temp (°C/s) | Control temp. (°C) | Alloying temp. (°C) | Alloying heat treatment time (s) |
| | | | | | | Element | mass% | | | | | | | | |
| 1 | Ex. | 71.9 | 0 | 8.0 | 20.0 | Pb | 0.001 | 780 | 50 | 3 | -10 | 5 | 650 | 680 | 20 |
| 2 | Ex. | 38.0 | 2.0 | 8.0 | 22.0 | Zn | 30.0 | 800 | 10 | 3 | 0 | 5 | 660 | 680 | 10 |
| 3 | Ex. | 51.4 | 2.0 | 8.0 | 28.0 | Zn | 10.0 | 830 | 60 | 3 | 0 | 5 | 500 | 680 | 10 |
| 4 | Ex. | 63.9 | 2.0 | 10.0 | 24.0 | Co | 0.006 | 900 | 60 | 3 | 0 | 5 | 680 | 680 | 10 |
| 5 | Ex. | 62.9 | 2.0 | 10.0 | 25.0 | Ni | 0.005 | 900 | 60 | 3 | 0 | 5 | 680 | 680 | 10 |
| 6 | Ex. | 63.9 | 2.0 | 10.0 | 24.0 | Ca | 0.006 | 900 | 60 | 3 | 0 | 5 | 680 | 680 | 10 |
| 7 | Ex. | 62.9 | 10.0 | 2.0 | 25.0 | v | 0.008 | 830 | 60 | 3 | 0 | 5 | 680 | 680 | 10 |
| 8 | Ex. | 67.7 | 1.0 | 2.0 | 29.0 | Bi | 0.004 | 830 | 60 | 3 | 0 | 5 | 680 | 680 | 10 |
| 9 | Ex. | 65.9 | 3.0 | 1.0 | 30.0 | Sb | 0.01 | 830 | 60 | 3 | 10 | 5 | 680 | 680 | 10 |
| 10 | Ex. | 64.2 | 1.0 | 1.0 | 33.0 | Sn | 0.01 | 830 | 60 | 3 | 0 | 5 | 680 | 680 | 10 |
| 11 | Ex. | 53.5 | 2.0 | 2.0 | 42.0 | Sr | 0.01 | 830 | 60 | 3 | 0 | 13 | 680 | 680 | 10 |
| 12 | Ex. | 47.3 | 0.6 | 1.0 | 51.0 | Nb | 0.01 | 830 | 60 | 3 | 0 | 15 | 680 | 680 | 10 |
| 13 | Ex. | 43.4 | 0.9 | 0.6 | 55.0 | Li | 0.01 | 830 | 60 | 3 | 0 | 15 | 700 | 680 | 5 |
| 14 | Ex. | 55.7 | 0.6 | 0.6 | 43.0 | Ag | 0.01 | 830 | 70 | 3 | 0 | 15 | 700 | 680 | 5 |
| 15 | Ex. | 57.7 | 0.6 | 0.6 | 41.0 | P | 0.001 | 830 | 100 | 3 | 0 | 15 | 700 | 680 | 5 |
| 16 | Ex. | 48.6 | 0.6 | 0.6 | 50.0 | Cu | 0.2 | 830 | 100 | 3 | 0 | 15 | 700 | 680 | 5 |
| 17 | Ex. | 47.7 | 0.6 | 0.6 | 51.0 | Mn | 0.02 | 830 | 100 | 3 | 0 | 15 | 700 | 680 | 5 |
| 18 | Ex. | 53.5 | 0.6 | 0.8 | 45.0 | In | 0.02 | 830 | 100 | 3 | 0 | 15 | 700 | 680 | 5 |
| 19 | Ex. | 52.7 | 0.6 | 0.6 | 46.0 | W | 0.02 | 830 | 100 | 3 | 0 | 15 | 700 | 680 | 5 |
| 20 | Ex. | 52.9 | 0.4 | 0.6 | 46.0 | B | 0.01 | 830 | 100 | 3 | 0 | 15 | 700 | 680 | 5 |
| 21 | Ex. | 49.7 | 0.6 | 0.6 | 49.0 | La | 0.02 | 830 | 100 | 3 | 0 | 15 | 700 | 680 | 5 |
| 22 | Ex. | 53.0 | 0.3 | 0.6 | 46.0 | Ce | 0.01 | 830 | 300 | 3 | 0 | 15 | 700 | 680 | 5 |
| 23 | Ex. | 56.7 | 0.6 | 0.6 | 42.0 | Cr | 0.05 | 830 | 100 | 3 | 0 | 15 | 700 | 680 | 5 |
| 24 | Ex. | 53.7 | 0.6 | 0.6 | 45.0 | Zr | 0.01 | 830 | 100 | 3 | 0 | 15 | 700 | 680 | 5 |
| 25 | Ex. | 54.0 | 0 | 0 | 46.0 | | | 830 | 100 | 3 | 0 | 15 | 700 | 680 | 5 |
| 26 | Ex. | 51.0 | 0.6 | 0.3 | 48.0 | Ti | 0.02 | 830 | 80 | 3 | 0 | 15 | 700 | 680 | 5 |
| 27 | Ex. | 56.7 | 0.6 | 0.6 | 42.0 | Mo | 0.01 | 830 | 100 | 3 | 0 | 15 | 700 | 680 | 5 |
| 28 | Ex. | 54.3 | 0.3 | 0.3 | 45.0 | Y | 0.02 | 830 | 100 | 3 | 0 | 15 | 700 | 680 | 5 |
| 29 | Ex. | 58.8 | 0.6 | 0.6 | 40.0 | | | 830 | 100 | 3 | 0 | 15 | 700 | 680 | 5 |
| 30 | Comp. ex. | 53.0 | **11.0** | 8.0 | 28.0 | | | 830 | 60 | 3 | 0 | 5 | 680 | 680 | 10 |
| 31 | Comp. ex. | 58.9 | 2.0 | **11.0** | 28.0 | | | 830 | 60 | 3 | 0 | 5 | 680 | 680 | 10 |
| 32 | Comp. ex. | 61.5 | 2.0 | 8.0 | 28.0 | | | **760** | 60 | 3 | 0 | 5 | 680 | 680 | 10 |
| 33 | Comp. ex. | 62.0 | 2.0 | 8.0 | 28.0 | | | 780 | **5** | 3 | 0 | 5 | 680 | 680 | 10 |
| 34 | Comp. ex. | 61.8 | 2.0 | 8.0 | 28.0 | | | 830 | 60 | 3 | **-20** | 5 | 680 | 680 | 10 |
| 35 | Comp. ex. | 61.9 | 2.0 | 8.0 | 28.0 | | | 830 | 60 | 3 | 0 | 3 | 680 | 680 | 10 |
| 36 | Comp. ex. | 61.8 | 2.0 | 8.0 | 28.0 | | | 830 | 60 | 3 | 0 | 5 | **480** | 680 | 10 |
| 37 | Comp. ex. | 62.0 | 2.0 | 8.0 | 28.0 | | | 830 | 60 | 3 | 0 | 5 | **20** | 680 | 10 |
| 38 | Comp. ex. | 75.0 | 2.0 | 8.0 | **15.0** | | | 830 | 60 | 3 | 0 | 5 | 680 | **640** | 10 |
| 39 | Comp. ex. | 61.8 | 2.0 | 8.0 | 28.0 | | | 830 | 60 | 3 | 0 | 5 | 680 | **760** | 10 |
| 40 | Comp. ex. | 62.0 | 2.0 | 8.0 | 28.0 | | | 830 | 60 | 3 | 0 | 5 | 680 | 680 | **0** |
| 41 | Comp. ex. | 61.7 | 2.0 | 8.0 | 28.0 | | | 830 | 60 | 3 | 0 | 5 | 680 | 680 | **25** |
| 42 | Comp. ex. | 67.5 | 2.0 | 8.0 | 22.0 | | | 800 | 10 | 3 | 0 | 5 | 660 | 680 | 10 |
| 43 | Ref. ex. | 22.5 | 0.6 | 0.8 | 45.0 | Zn | **31.0** | 830 | 100 | 3 | 0 | 15 | 700 | 680 | 5 |

| | | | | | | | | | | | | | | | |
|---|---|---|---|---|---|---|---|---|---|---|---|---|---|---|---|
| Bold underlines indicate outside scope of present invention or outside preferable range, | | | | | | | | | | | | | | | |

### [Table 1-2]

**Table 1-2**

| No | Class | Cross-sectional structure | | | | | Performance | | |
|---|---|---|---|---|---|---|---|---|---|
| | | (L-L₀) /L₀× 100 | Fe-Al phase thickness (µm) | ΣTi/L₀×100 | MgZn2 phase area ratio (%) | Mg-containing phase cross-sectional coverage rate (%) | Cold formability | Post-painting corrosion resistance | Chemical convertibility |
| 1 | Ex. | 3 | 4 | 80 | 0 | 0 | A | A | - |
| 2 | Ex. | 3 | 12 | 89 | 9 | 8 | A | A | - |
| 3 | Ex. | 3 | 7 | 98 | 3 | 7 | A | A | - |
| 4 | Ex. | 3 | 14 | 100 | 0 | 8 | A | AA | - |
| 5 | Ex. | 3 | 13 | 100 | 0 | 8 | A | AA | - |
| 6 | Ex. | 3 | 14 | 100 | 0 | 8 | A | AA | - |
| 7 | Ex. | 4 | 12 | 33 | 0 | 19 | A | A | - |
| 8 | Ex. | 5 | 12 | 32 | 0 | 55 | AA | AA | A |
| 9 | Ex. | 6 | 12 | 20 | 0 | 33 | AA | AA | A |
| 10 | Ex. | 5 | 12 | 19 | 0 | 20 | AA | AA | A |
| 11 | Ex. | 6 | 12 | 27 | 0 | 26 | AA | AA | A |
| 12 | Ex. | 7 | 12 | 19 | 0 | 60 | AAA | AA | AA |
| 13 | Ex. | 8 | 12 | 10 | 0 | 100 | AAA | AA | AA |
| 14 | Ex. | 9 | 12 | 1 | 0 | 100 | AAA | AAA | AA |
| 15 | Ex. | 9 | 12 | 0 | 0 | 99 | AAA | AAA | AA |
| 16 | Ex. | 9 | 12 | 0 | 0 | 98 | AAA | AAA | AA |
| 17 | Ex. | 9 | 16 | 0 | 0 | 97 | AAA | AAA | AA |
| 18 | Ex. | 9 | 16 | 0 | 0 | 94 | AAA | AAA | AA |
| 19 | Ex. | 9 | 16 | 0 | 0 | 99 | AAA | AAA | AA |
| 20 | Ex. | 9 | 16 | 0 | 0 | 93 | AAA | AAA | AA |
| 21 | Ex. | 9 | 16 | 0 | 0 | 90 | AAA | AAA | AA |
| 22 | Ex. | 9 | 16 | 0 | 0 | 89 | AAA | AAA | AA |
| 23 | Ex. | 9 | 16 | 0 | 0 | 94 | AAA | AAA | AA |
| 24 | Ex. | 9 | 16 | 0 | 0 | 99 | AAA | AAA | AA |
| 25 | Ex. | 9 | 16 | 0 | 0 | 0 | AAA | AAA | - |
| 26 | Ex. | 9 | 16 | 0 | 0 | 80 | AAA | AAA | AA |
| 27 | Ex. | 9 | 16 | 0 | 0 | 90 | AAA | AAA | AA |
| 28 | Ex. | 9 | 16 | 0 | 0 | 94 | AAA | AAA | AA |
| 29 | Ex. | 9 | 16 | 0 | 0 | 93 | AAA | AAA | AA |
| 30 | Comp. ex. | **1** | 7 | 100 | 0 | 8 | B | A | - |
| 31 | Comp. ex. | **1** | 7 | 100 | 0 | 8 | B | A | - |
| 32 | Comp. ex. | **1** | 7 | 98 | 0 | 7 | B | A | - |
| 33 | Comp. ex. | **2** | 7 | 98 | 0 | 7 | B | A | - |
| 34 | Comp. ex. | **1** | 7 | 98 | 0 | 7 | B | A | - |
| 35 | Comp. ex. | **2** | 7 | 98 | 0 | 7 | B | A | - |
| 36 | Comp. ex. | **2** | 7 | 98 | 0 | 7 | B | A | - |
| 37 | Comp. ex. | **1** | 7 | 98 | 0 | 7 | B | A | - |
| 38 | Comp. ex. | 3 | **3** | 98 | 0 | 7 | A | B | - |
| 39 | Comp. ex. | **1** | 7 | 98 | 0 | 7 | B | A | - |
| 40 | Comp. ex. | **1** | **3** | 98 | 0 | 7 | B | B | - |
| 41 | Comp. ex. | **1** | 7 | 98 | 0 | 7 | B | A | - |
| 42 | Comp. ex. | 3 | **52** | 89 | 0 | 8 | B | A | - |
| 43 | Ref. ex. | 9 | 16 | 0 | 11 | 90 | AAA | AAA | AA |

| | | | | | | | | | |
|---|---|---|---|---|---|---|---|---|---|
| Bold underlines indicate outside scope of present invention_{∘} | | | | | | | | | |

Referring to Table 1, in Comparative Examples 30 and 31, the respective Mg and Si contents in the plating layers were high, and therefore it may be that a sufficient alloying speed could not be obtained at the time of alloying of the plating layer. As a result, at the interface with the base steel sheet, the value of (L-L₀ )/L₀ ×100 became less than 3, i.e., the interface with the base steel sheet became a flatter shape with less roughness and the cold formability fell. In Comparative Example 32, the annealing temperature was low, and therefore it may be that the surface layer part of the cold rolled steel sheet became insufficiently decarburized and a sufficient alloying speed could not be obtained at the time of alloying the plating layer. As a result, the value of (L-L₀ )/L₀ ×100 became less than 3 and the cold formability fell. In Comparative Example 33, the annealing time was short, and therefore similarly it may be that the surface layer part of the cold rolled steel sheet became insufficiently decarburized and a sufficient alloying speed could not be obtained at the time of alloying the plating layer. As a result, the value of (L-L₀ )/L₀ ×100 became less than 3 and the cold formability fell. In Comparative Example 34, the dew point in the annealing step was low, and therefore similarly it may be that the surface layer part of the cold rolled steel sheet became insufficiently decarburized and a sufficient alloying speed could not be obtained at the time of alloying the plating layer. As a result, the value of (L-L₀ )/L₀ ×100 became less than 3 and the cold formability fell. In Comparative Example 35, the average cooling speed from the annealing temperature to the control temperature of 500 to 750°C was slow, and therefore it may be that in the microstructure of the cold rolled steel sheet, there was remarkable transformation from the austenite phases to ferrite and a sufficient alloying speed could not be obtained in the subsequent plating step. As a result, the value of (L-L₀ )/L₀ ×100 became less than 3 and the cold formability fell.

In each of Comparative Examples 36 and 37, the control temperature in the annealing step was low, and therefore it may be that in the microstructure of the cold rolled steel sheet, there was remarkable transformation from the austenite phases to bainite and martensite and a sufficient alloying speed could not be obtained in the subsequent plating step. As a result, the value of (L-L₀ )/L₀ ×100 became less than 3 and the cold formability fell. In Comparative Example 38, the alloying temperature of the plating layer was low, and therefore it may be that the plating layer solidified in a state with insufficient alloying. As a result, the Fe content in the plating layer fell. Further, the desired Fe-Al phase thickness could not be obtained and the post-painting corrosion resistance fell. In Comparative Example 39, the alloying temperature of the plating layer was high, and therefore it may be that the alloying of the plating layer excessively proceeded. As a result, the value of (L-L₀ )/L₀ ×100 became less than 3, i.e., the interface with the base steel sheet became a flatter shape with less roughness, and the cold formability fell. In Comparative Example 40, the alloying time of the plating layer was short, and therefore the plating layer was insufficiently alloyed, the interface of the plating layer and base steel sheet could not be rendered a rough shape, i.e., the value of (L-L₀ )/L₀ ×100 became less than 3, and further the desired Fe-Al phase thickness could not be obtained. As a result, the cold formability and post-painting corrosion resistance fell. In Comparative Example 41, the alloying time of the plating layer was long, and therefore it may be that the alloying of the plating layer excessively proceeded. As a result, the value of (L-L₀ )/L₀ ×100 became less than 3 and the cold formability fell. in Comparative Example 42, the thickness of the Fe-Al phase was large, and therefore the cold formability of the plated steel sheet fell due to the excessive hardening of the plating layer.

In contrast to this, in each of the plated steel sheets according to all of the examples, by controlling the chemical composition of the plating layer to within a predetermined range, i.e., by suitably setting it to, by mass%, Fe: 20.0 to 55.0%, Mg: 0 to 10.0%, Si: 0 to 10.0%, and Al: 20.0% or more, controlling the thickness of the Fe-Al phase contained in the plating layer to within a range of 4 to 50 µm, and further controlling the interfacial shape of the plating layer and base steel sheet so as to satisfy the relation of (L-L₀ )/L₀ ×100≥3, it was possible to remarkably improve both of post-painting corrosion resistance and cold formability in the obtained plated steel sheet. In particular, in each of Examples 8 to 11 where the value of (L-L₀ )/L₀ was controlled to 5 or more, the cold formability was evaluated as AA and the cold formability could be further improved. Similarly, in each of Examples 12 to 29 where the value of (L-L₀ )/L₀ was controlled to 7 or more, the cold formability was evaluated as AAA and the cold formability could be further improved more. Further, in each of Examples 14 to 29 where the thickness of the Fe-Al phase was made 12 µm or more and further ΣTᵢ /L₀ ×100 was controlled to 1 or less (i.e., the projection rate of Fe-Al-Si phase was 1% or less), the post-painting corrosion resistance was evaluated as AAA and an extremely high post-painting corrosion resistance could be achieved. In addition, in each of Examples 8 to 11 where the surface coverage rate of the Mg-containing phase was controlled to 20% or more, the chemical convertibility was evaluated as A and similarly in each of Examples 12 to 24 and 26 to 29 where the surface coverage rate of the Mg-containing phase was controlled to 60% or more, the chemical convertibility was evaluated as AA and an extremely high chemical convertibility could be achieved.

### REFERENCE SIGNS LIST

1 plated steel sheet
2 base steel sheet
3 plating layer
4 Fe-Al phase
5 Fe-Al-Si phase
6 Mg-containing phase
L interfacial length of plating layer and base steel sheet
L₀ length of surface of base steel sheet

## Claims

1. A plated steel sheet comprising a base steel sheet and a plating layer formed on a surface of the base steel sheet, wherein
the plating layer has a chemical composition comprising, by mass%,
Fe: 20.0 to 55.0%,
Mg: 0 to 10.0%,
Si: 0 to 10.0%, and
Zn: 0 to 30.0%,
further comprising at least one of
Ni: 0 to 1.000%,
Ca: 0 to 4.000%,
Sb: 0 to 0.500%,
Pb: 0 to 0.500%,
Cu: 0 to 1.000%,
Sn: 0 to 1.000%,
Ti: 0 to 1.000%,
Cr: 0 to 1.000%,
Nb: 0 to 1.000%,
Zr: 0 to 1.000%,
Mn: 0 to 1.000%,
Mo: 0 to 1.000%,
Ag: 0 to 1.000%,
Li: 0 to 1.000%,
La: 0 to 0.500%,
Ce: 0 to 0.500%,
B: 0 to 0.500%,
Y: 0 to 0.500%,
Sr: 0 to 0.500%,
In: 0 to 0.500%,
Co: 0 to 0.500%,
Bi: 0 to 0.500%,
P: 0 to 0.500%,
W: 0 to 0.500%, and
V: 0 to 0.500% in a total of 5.000% or less, and
a balance: 20.0% or more of Al and impurities,
in a cross-section of the plating layer, an interfacial length L of the plating layer and the base steel sheet and a length L₀ of a surface of the base steel sheet satisfies (L-L₀ )/L₀ ×100≥3, and
the plating layer comprises an Fe-Al phase and a thickness of the Fe-Al phase is 4 to 50 µm.

2. The plated steel sheet according to claim 1, wherein (L-L₀ )/L₀ ×100≥5.

3. The plated steel sheet according to claim 2, wherein (L-L₀ )/L₀ ×100≥7.

4. The plated steel sheet according to any one of claims 1 to 3, wherein an Mg content in the plating layer is 0.2% or more.

5. The plated steel sheet according to any one of claims 1 to 4, wherein the chemical composition comprises, by mass%,
Mg: 0.3 to 10.0% and
Si: 0 to 1.0%.

6. The plated steel sheet according to any one of claims 1 to 5, wherein the thickness of the Fe-Al phase is 12 to 50 µm.

7. The plated steel sheet according to any one of claims 1 to 6, wherein in the cross-section of the plating layer, projected lengths Tᵢ of an Fe-Al-Si phase in the plating layer and a length L₀ of a surface of the base steel sheet satisfy ΣTᵢ /L₀ ×100≤20.

8. The plated steel sheet according to claim 7, wherein ΣTᵢ /L₀ ×100≤1.

9. The plated steel sheet according to any one of claims 1 to 8, wherein the chemical composition comprises, by mass%, Mg: 0.3 to 10.0%,
the plating layer further comprises an Mg-containing phase, and
in a cross-section of the plating layer, a surface coverage rate of the Mg-containing phase is 20 to 100%.

10. The plated steel sheet according to claim 9, wherein the surface coverage rate of the Mg-containing phase is 60 to 100%.

11. The plated steel sheet according to any one of claims 1 to 10, wherein an Mg content in the plating layer is 2.4% or less.

12. The plated steel sheet according to any one of claims 1 to 11, wherein an Si content in the plating layer is 0.2% or more.

13. The plated steel sheet according to any one of claims 1 to 12, wherein an area ratio of an MgZn₂ phase in the plating layer is less than 10%.
